(19) Europäisches Patentamt / European Patent Office / Office européen des brevets

(11) **EP 2 573 586 B1**

(12) **FASCICULE DE BREVET EUROPEEN**

(45) Date de publication et mention
de la délivrance du brevet:
**10.09.2014 Bulletin 2014/37**

(51) Int Cl.:
**G01S 19/28** (2010.01)       **G01S 19/15** (2010.01)
**G01S 19/20** (2010.01)       **G08G 5/02** (2006.01)

(21) Numéro de dépôt: **12185165.3**

(22) Date de dépôt: **20.09.2012**

(54) **Procédé et système de pilotage d'un aéronef lors d'une approche d'une piste d'atterrissage**

Verfahren und System zur Steuerung eines Luftfahrzeugs in der Anflugphase auf eine Landebahn

Method and system for piloting an aircraft during runway approach

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.09.2011 FR 1158446**

(43) Date de publication de la demande:
**27.03.2013 Bulletin 2013/13**

(73) Titulaires:
• **Airbus Operations (S.A.S.)
31060 Toulouse (FR)**
• **Ecole Nationale de l'Aviation Civile (E.N.A.C.)
31055 Toulouse (FR)**

(72) Inventeurs:
• **Neri, Pierre
31170 Tournefeuille (FR)**
• **Azoulai, Laurent
31700 Mondonville (FR)**
• **Muller, Jean
31170 Tournefeuille (FR)**
• **Macabiau, Christophe
82000 Montauban (FR)**

(74) Mandataire: **Sarraméa, Claude
Airbus Operations (SAS)
ETRT
M0101/1, 316, route de Bayonne
31060 Toulouse (FR)**

(56) Documents cités:
**EP-A1- 1 965 219**

**Description**

La présente invention concerne le domaine de la navigation des aéronefs et plus particulièrement la détermination de la position calculée d'un aéronef, basée sur la navigation satellitaire GNSS (« Global Navigation Satellite System » en anglais), tel que le GPS, lors de la partie approche finale d'une approche de précision en mode automatique, pouvant aller jusqu'à un atterrissage automatique aussi appelé « autoland » en terminologie anglo-saxonne. L'invention est plus particulièrement relative à un procédé et à un dispositif de pilotage de l'aéronef lors de ladite approche finale, tel que les informations d'écart en latéral et en vertical fournies à un pilote automatique et notamment aux lois de guidage d'approche de précision ne subissent pas des sauts qui pourraient affecter la performance de l'approche et de l'atterrissage automatique.

Dans le domaine de l'aviation civile, il existe des systèmes d'aide à l'atterrissage permettant à un avion de voler des opérations d'approche de précision. Ces systèmes apportent un bénéfice opérationnel incontestable, permettant de guider l'avion de façon sûre grâce notamment à un guidage vertical jusqu'à une hauteur de décision correspondant à des minima généralement inférieurs ou égaux à 200 pieds (environ 60 mètres) qui sont fonction de la catégorie (cat-I à cat-III) de l'approche de précision considérée. Ces minima sont même nuls pour des approches de catégorie Cat-IIIC. Certaines desdites approches peuvent correspondre à un atterrissage entièrement automatique. Les principaux systèmes d'aide à l'atterrissage existants, qui permettent de réaliser des approches de précision, sont l'ILS (« Instrument Landing System » en anglais) et le MLS (« Microwave Landing System » en anglais). Ces systèmes d'aide à l'atterrissage font appel à une ou plusieurs stations sol dédiées à cet usage et à des moyens, à bord de l'aéronef, de réception de signaux émis par lesdites stations sol.

Il existe également des systèmes d'aide à l'atterrissage utilisant une information de position de l'avion déterminée à partir d'un système de positionnement satellitaire de type GNSS, ladite position étant comparée à une trajectoire de référence correspondant à l'approche considérée. Des techniques dites d'augmentation permettent d'améliorer la précision, l'intégrité, la continuité et la disponibilité des informations de position utilisées par lesdits systèmes d'aide à l'atterrissage. De telles techniques ont notamment été définies par l'OACI (« Organisation de l'Aviation Civile Internationale »). Il est par exemple possible d'utiliser une augmentation de type GBAS (« Ground Based Augmentation System » en anglais), comme dans le système d'aide à l'atterrissage GLS (« Ground based augmentation Landing System » en anglais), ce qui permet de réaliser des approches de précision.

Pour l'avenir, un objectif serait de pouvoir effectuer des approches de précision, pouvant aller jusqu'à l'atterrissage automatique, sur tout type d'aéroport, donc également sur des aéroports non équipés de stations au sol, telles que par exemple celles utilisées pour les systèmes ILS ou MLS. Pour cela, il serait nécessaire d'utiliser des systèmes d'aide à l'atterrissage utilisant une information de position de l'aéronef déterminée à partir d'un système de positionnement satellitaire de type GNSS, ainsi que des techniques d'augmentation ne faisant pas nécessairement appel à des stations sol situées au sein de l'aéroport. Ces techniques d'augmentation peuvent par exemple être de type SBAS (« Satellite Based Augmentation System » en anglais) ou de type ABAS (« Airborne Based Augmentation System » en anglais) définies par l'OACI. Ce dernier type d'augmentation fait notamment appel à des techniques de type RAIM (« Receiver Autonomous Integrity Monitoring » en anglais) et/ou de type AAIM (« Aircraft Autonomous Integrity Monitoring » en anglais). Les augmentations de type SBAS peuvent quant à elles être implémentées notamment par des systèmes tels que WAAS (« Wide Area Augmentation System » en anglais) aux USA ou EGNOS (« European geostationary navigation overlay system » en anglais) en Europe.

Dans les approches faisant appel à des systèmes d'aide à l'atterrissage utilisant une information de position de l'avion déterminée à partir d'un système de positionnement satellitaire de type GNSS, ladite information de position est calculée en 3 dimensions à partir de mesures de distance, appelées pseudo-distance entre les satellites GNSS et un ou plusieurs récepteurs GNSS à bord de l'avion. La performance et le comportement temporel de la position GNSS en 3 dimensions dépendent des différents contributeurs d'erreurs liés à la constellation de satellites, aux effets de la propagation du signal GPS dans l'atmosphère et à la qualité du récepteur d'une part, et de la géométrie de la constellation GNSS d'autre part. Par exemple, dans le cas de la constellation GPS existante, un récepteur utilisateur voit des satellites se lever et/ou se coucher du fait de leur mouvement en orbite autour de la terre, orbite dont la révolution est de 23 heures 56 minutes. Un satellite peut aussi être enlevé du calcul de la position basée GPS du fait d'une panne dudit satellite détectée par le récepteur grâce à un système d'augmentation tel que SBAS, GBAS ou ABAS. Cet ajout ou retrait d'un ou plusieurs satellites dans le calcul de la position de l'avion, pendant l'approche, peut induire des sauts de position de quelques mètres. Ces sauts de position, qui sont acceptables dans le cadre d'approches limitées à une hauteur de décision, par exemple de 200 pieds (environ 60 mètres), pourraient ne plus être acceptables pour des approches de précision ayant une hauteur de décision inférieure, en particulier en cas d'atterrissage automatique. En effet, étant donné les performances de guidage élevées requises pour un atterrissage automatique, il est nécessaire de connaître la position de l'avion avec une très grande précision (de l'ordre de quelques mètres) et un saut de position pourrait être assimilé à un fort biais qui dans certains cas pourrait ne pas être acceptable.

Le document EP1 965 219 A1 décrit un procédé de prédiction de la performance d'un système de navigation par satellite. Toutefois, ce document n'enseigne aucune solution permettant d'éviter de tels sauts de position.

La présente invention a pour objet de remédier aux inconvénients précités. Elle concerne un procédé de pilotage d'un aéronef lors d'une approche en vue d'un atterrissage sur une piste d'atterrissage, ladite approche étant préalablement sélectionnée et le guidage de l'aéronef au cours de ladite approche utilisant une information de position de l'aéronef obtenue d'au moins un système de navigation satellitaire GNSS.

Ce procédé est remarquable en ce que :

avant le début de l'approche finale correspondant à ladite approche, il comporte les étapes suivantes :

- déterminer de façon automatique un premier instant $t_{FAF}$ correspondant au début de ladite approche finale ;
- déterminer de façon automatique un deuxième instant $t_{TD}$ correspondant à l'atterrissage de l'aéronef sur ladite piste ; et
- déterminer de façon automatique un ensemble de satellites dudit système de navigation satellitaire susceptibles d'être exclus du calcul de ladite information de position de l'aéronef pendant au moins une partie de l'intervalle de temps compris entre le premier instant $t_{FAF}$ et le deuxième instant $t_{TD}$ ;

pendant ladite approche finale, les étapes suivantes sont réalisées de façon automatique et itérative :

- déterminer ladite information de position de l'aéronef en excluant les informations correspondant à tous les satellites dudit ensemble de satellites ; et
- guider l'aéronef le long de sa trajectoire d'approche finale en utilisant au moins ladite information de position.

Ce procédé présente ainsi l'avantage d'éviter un saut dans la valeur de ladite position qui serait dû à l'exclusion d'un satellite par rapport à l'aéronef pendant l'approche finale, puisque les satellites susceptibles d'être exclus pendant cette approche finale ne sont pas pris en compte, depuis le début de l'approche finale, pour la détermination de la position de l'aéronef.

De préférence, l'ensemble de satellites correspond aux satellites susceptibles de se coucher, par rapport à l'aéronef, au cours dudit intervalle de temps. On évite ainsi un saut dans la valeur de ladite position qui serait dû au coucher d'un satellite par rapport à l'aéronef pendant l'approche finale.

De préférence, encore, cet ensemble de satellites comprend en outre les satellites susceptibles de se lever, par rapport à l'aéronef, au cours dudit intervalle de temps. On évite ainsi un saut dans la valeur de ladite position qui serait dû au lever d'un satellite par rapport à l'aéronef pendant l'approche finale.

Dans un mode particulier de réalisation, pour déterminer si un satellite Si est susceptible de se coucher, par rapport à l'aéronef, au cours dudit intervalle de temps, on calcule les deux équations suivantes :

$$\alpha = \frac{\theta^i(k) - \theta^i(k-1)}{t(k) - t(k-1)}$$

où :

t(k) est le temps actuel ;
t(k-1) correspond à un instant antérieur au temps actuel ;
$\theta^i(k)$ est l'angle d'élévation du satellite Si par rapport à l'aéronef au temps t(k) ;
$\theta^i(k-1)$ est l'angle d'élévation du satellite Si par rapport à l'aéronef au temps t(k-1) ;
et

$$t_{set}^i = \frac{\theta_{mask} - \theta^i(k)}{\alpha} + t(k)$$

où :

$t_{set}^i$ est l'instant de coucher du satellite Si ;
$\theta_{mask}$ est l'angle de masque choisi pour le système de navigation satellitaire auquel appartient le satellite Si ;

et si l'instant $t^i_{set}$ appartient à l'intervalle de temps $[T_{FAF} ; T_{TD}]$ on considère que le satellite Si est susceptible de se coucher pendant ledit intervalle de temps.

De façon avantageuse, ledit premier instant $t_{FAF}$ est déterminé en calculant un temps estimé d'arrivée $ETA_{FAF}$ de l'aéronef à la position de début d'approche finale et ledit deuxième instant $t_{TD}$ est déterminé en calculant un temps estimé d'arrivée $ETA_{TD}$ de l'aéronef à la position d'atterrissage sur la piste.

Dans ce cas, de façon avantageuse, lesdits premier et deuxième instants sont calculés en utilisant les formules suivantes :

$$t_{FAF} = ETA_{FAF} - \Delta t_{FAF}$$

$$t_{TD} = ETA_{TD} + \Delta t_{TD}$$

où

$\Delta t_{FAF}$ et $\Delta t_{TD}$ sont des marges de temps prédéterminées.

Dans un mode préféré de réalisation, ladite information de position de l'aéronef est obtenue en combinant des informations provenant d'au moins un système de navigation satellitaire GNSS et d'au moins un système d'augmentation. Ledit au moins un système d'augmentation peut notamment être de type SBAS, de type ABAS ou de type GBAS. L'utilisation d'informations provenant d'un système d'augmentation permet d'améliorer l'intégrité de l'information de position. L'utilisation de systèmes d'augmentation de type SBAS ou ABAS permet en outre de réaliser une approche sur un aéroport non équipé de stations au sol.

De façon avantageuse, ladite information de position de l'aéronef est obtenue en utilisant une pluralité de systèmes de navigation satellitaire GNSS. Cela présente l'avantage de permettre le calcul de l'information de position même si le nombre de satellites non exclus appartenant à un même système de navigation satellitaire et utilisables au cours de l'approche finale était insuffisant pour calculer une telle information de position. En effet, l'utilisation de satellites appartenant à d'autres systèmes de navigation satellitaire permet de compenser une telle insuffisance. De plus, même si le nombre de satellites était suffisant, cela peut permettre d'améliorer la précision, l'intégrité et la continuité de ladite information de position.

L'invention est également relative à un système de pilotage d'un aéronef comportant :

- des moyens pour sélectionner une approche en vue d'un atterrissage sur une piste d'atterrissage ;
- des moyens aptes à recevoir des signaux d'un système de navigation satellitaire GNSS ;
- une unité de traitement pour déterminer une information de position de l'aéronef à partir au moins desdits signaux reçus du système de navigation satellitaire GNSS ;
- des moyens de guidage de l'aéronef, aptes à recevoir de l'unité de traitement ladite information de position de l'aéronef et à produire des signaux de guidage de l'aéronef le long d'une trajectoire d'approche finale correspondant à une approche sélectionnée, en fonction de ladite information de position.

Ce système est remarquable en ce qu'il comporte en outre :

- des moyens pour déterminer, avant le début de l'approche finale, un premier instant $t_{FAF}$ correspondant au début de ladite approche finale et un deuxième instant $t_{TD}$ correspondant à l'atterrissage de l'aéronef sur ladite piste ; et
- des moyens pour déterminer, avant le début de l'approche finale, un ensemble de satellites dudit système de navigation satellitaire susceptibles d'être exclus du calcul de ladite information de position de l'aéronef pendant au moins une partie de l'intervalle de temps compris entre le premier instant $t_{FAF}$ et le deuxième instant $t_{TD}$;

ladite unité de traitement déterminant l'information de position de l'aéronef, pendant l'approche finale, en excluant les informations correspondant à tous les satellites dudit ensemble de satellites.

Dans un mode préféré de réalisation, l'unité de traitement est en outre apte à recevoir des informations d'un système d'augmentation et à déterminer l'information de position de l'aéronef à partir au moins des signaux reçus du système de navigation satellitaire GNSS et desdites informations reçues d'un système d'augmentation.

De façon avantageuse, ce système de pilotage comporte des moyens aptes à recevoir des signaux d'une pluralité de systèmes de navigation satellitaire GNSS, l'unité de traitement déterminant l'information de position de l'aéronef à partir au moins des signaux reçus de ladite pluralité de systèmes de navigation satellitaire GNSS.

L'invention est aussi relative à un aéronef comportant un système de pilotage tel que précité.

L'invention sera mieux comprise à la lecture de la description qui suit et à l'examen des figures annexées.

La figure 1 est un schéma synoptique d'un système de pilotage d'un aéronef selon un mode de réalisation de l'invention.

La figure 2 est une représentation de l'approche finale d'un aéronef sur une piste d'atterrissage.

Les figures 3 et 4 sont des schémas synoptiques de sous-ensembles d'un système de pilotage d'un aéronef conforme à ce mode de réalisation de l'invention.

La figure 5 est une représentation de l'angle d'élévation d'un satellite par rapport à l'aéronef.

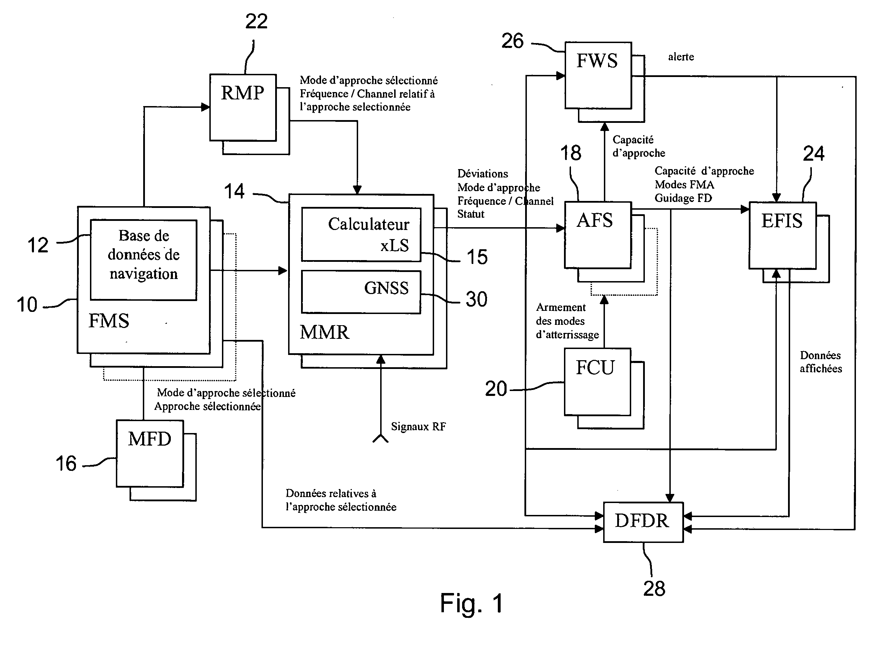

La figure 1 représente un système de pilotage d'un aéronef conforme à l'invention. Ce système de pilotage comporte plusieurs calculateurs de pilotage de l'aéronef, en particulier un calculateur 10 de gestion de vol de type FMS (« Flight Management System » en anglais) et un récepteur 14 multi-modes MMR (« Multi Mode Receiver » en anglais). Ce récepteur 14 comporte notamment des moyens 30 de réception de signaux GNSS, par exemple GPS. Il comporte également un ou plusieurs calculateurs 15 supportant les fonctions xLS disponibles sur l'aéronef, où le terme xLS indique de façon générique les différents systèmes d'aide à l'atterrissage tels que ILS, MLS, GLS...

De façon préférée, le calculateur 10 de gestion de vol FMS comporte une base de données de navigation 12. Cette base de données contient en particulier des informations relatives aux approches de pistes d'atterrissage. En outre, de façon connue, le calculateur 10 de gestion de vol est relié à une interface homme-machine 16 qui peut par exemple être de type MFD (« Multi Function Display » an anglais) ou MCDU (« Multipurpose Control and Display Unit » en anglais).

Le système de pilotage comporte également un calculateur 18 de guidage, par exemple de type AFS (« Auto Flight System » en anglais) qui est apte à calculer des ordres de guidage de l'aéronef, lesquels peuvent être utilisés par le pilote automatique en mode de guidage automatique ou par un directeur de vol. Ce calculateur de guidage est relié à une interface homme-machine 20, par exemple de type FCU (« Flight Control Unit » en anglais).

De façon préférée, bien que non indispensable pour la mise en oeuvre de l'invention, le système de pilotage peut comporter en outre :

- un panneau de commande radio 22 de type RMP (« Radio Management Panel » en anglais), lequel peut être utilisé par un pilote pour sélectionner une approche par le mode d'approche et la fréquence (ou le canal) en cas de panne du MFD (ou du MCDU) 16 ou en cas de panne du calculateur FMS 10 ;
- un calculateur 24 de type EFIS (« Electronic Flight Instrument System » en anglais) qui correspond à un système électronique d'instruments de vol affichés sur des moyens d'affichage de l'aéronef ;
- un calculateur d'alerte 26 de type FWS (« Flight Warning System » en anglais) ; et
- un calculateur 28 d'enregistrement de données DFDR (« Digital Flight Data Recorder » en anglais) qui correspond à un enregistreur de données digitales de vol.

De façon classique en aéronautique, les différents calculateurs du système de pilotage font de préférence l'objet de redondance pour des raisons de sûreté de fonctionnement. A titre d'exemple, le système de pilotage peut comporter deux ou trois FMS, deux MMR, deux ou trois AFS, deux FCU, deux RMP, deux EFIS, deux FWS et deux DFDR.

Le système de pilotage peut être implémenté aussi bien au moyen de calculateurs spécifiques à chaque fonction (FMS, MMR, FWS...) généralement appelés LRU (« Line Replacement Unit » en anglais), que sous la forme d'une architecture modulaire distribuée de type IMA (« Integrated Modular Avionics » en anglais) dans laquelle les différentes fonctions sont implémentées dans des calculateurs non spécifiques communiquant entre eux.

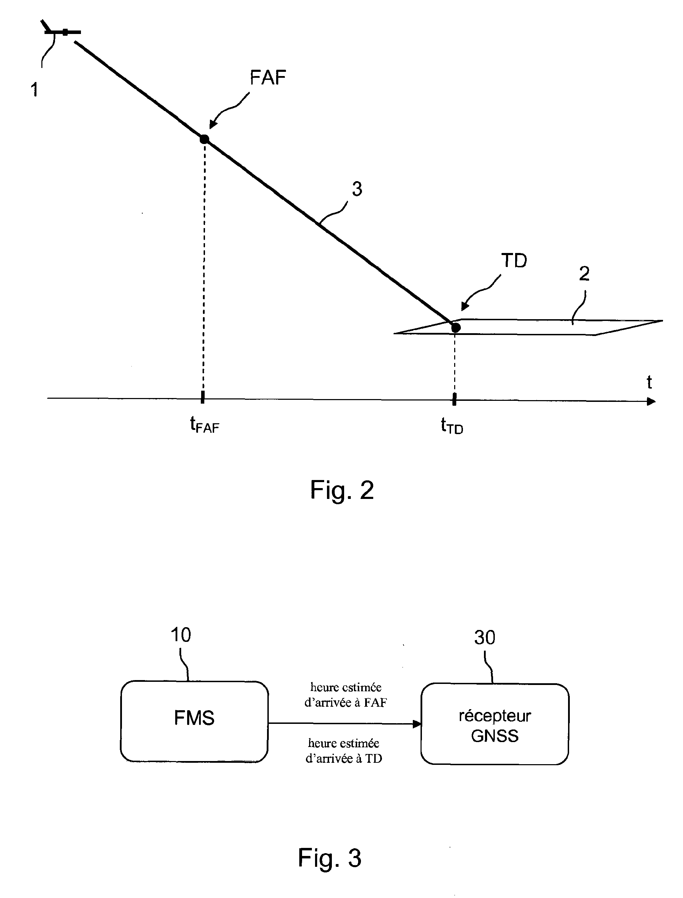

En vue de l'atterrissage de l'aéronef 1 sur une piste d'atterrissage 2 telle que celle représentée sur la figure 2, un pilote de l'aéronef sélectionne une approche de ladite piste parmi les approches possibles pour cette piste, enregistrées dans la base de données de navigation 12 du calculateur de gestion de vol 10. Il peut notamment sélectionner cette approche au moyen de l'interface MCDU 16. Cette sélection peut être réalisée soit lors de la construction du plan de vol dans le FMS, soit pendant une phase de croisière de l'aéronef, avant l'approche. Dans la suite du document, on considèrera uniquement le cas où le type de l'approche sélectionnée est tel que le guidage de l'aéronef le long de l'axe d'approche, en particulier le long de l'axe d'approche finale 3, est réalisé en utilisant une information de position de l'aéronef obtenue d'au moins un système de navigation satellitaire GNSS.

L'approche finale correspond à la partie de l'approche comprise entre un point FAF (« Final Approach Fix » en anglais) correspondant au début de l'approche finale et un point TD (« Touch Down » en anglais) correspondant à l'atterrissage de l'aéronef sur la piste 2, notamment le point de toucher des roues de l'aéronef sur la piste. Le point FAF est généralement un point prédéterminé mentionné dans la base de données de navigation 12.

Selon l'invention, avant le début de l'approche finale, on détermine de façon automatique les informations suivantes :

- un premier instant $t_{FAF}$ correspondant au début de l'approche finale, c'est-à-dire au passage de l'aéronef au point FAF ; et

- un deuxième instant $T_{TD}$ correspondant à l'atterrissage de l'aéronef sur la piste, au point TD.

De façon préférée, les instants $T_{FAF}$ et $T_{TD}$ sont déterminés par le FMS qui réalise pour cela, de façon connue, une estimation de l'heure d'arrivée (appelée ETA, c'est-à-dire « Estimated Time of Arrival » en anglais) de l'aéronef en chacun des points FAF et TD. Le FMS détermine ainsi les heures d'arrivée estimées $ETA_{FAF}$ et $ETA_{TD}$ correspondant respectivement aux instants $T_{FAF}$ et $T_{TD}$.

De façon préférée, encore, on tient compte de marges de temps prédéterminées $\Delta T_{FAF}$ et $\Delta t_{TD}$ par rapport aux heures d'arrivée estimées $ETA_{FAF}$ et $ETA_{TD}$, permettant de s'affranchir des incertitudes liées à l'estimation desdites heures d'arrivée. Les instants $T_{FAF}$ et $T_{TD}$ peuvent alors être exprimés par les formules suivantes :

$$t_{FAF} = ETA_{FAF} - \Delta t_{FAF}$$

$$t_{TD} = ETA_{TD} + \Delta t_{TD}$$

A titre d'exemple, on peut choisir lesdites marges de temps prédéterminées $\Delta t_{FAF}$ et $\Delta t_{TD}$ dans un intervalle de temps compris entre 1 seconde et 30 secondes, de préférence 10 secondes, en fonction de la précision de l'estimation des heures d'arrivée $ETA_{FAF}$ et $ETA_{TD}$.

En outre, toujours avant le début de l'approche finale, on détermine un ensemble de satellites dudit système de navigation satellitaire susceptibles d'être exclus du calcul de ladite information de position de l'aéronef pendant au moins une partie de l'intervalle de temps compris entre lesdits premier et deuxième instants $T_{FAF}$ et $T_{TD}$. Les satellites susceptibles d'être exclus dudit calcul correspondent de façon préférée aux satellites susceptibles de se coucher, par rapport à l'aéronef, au cours dudit intervalle de temps.

Dans un exemple de réalisation représenté sur la figure 3, les valeurs des instants $T_{FAF}$ et $T_{TD}$ sont transmises par le calculateur 10 de gestion de vol au récepteur GNSS 30 intégré dans le récepteur multi-modes MMR 14. L'ensemble de satellites du système de navigation satellitaire susceptibles d'être exclus du calcul de l'information de position de l'aéronef est alors déterminé par des moyens de calcul intégrés dans ledit récepteur GNSS 30. Par exemple, ces moyens de calcul peuvent faire partie d'une unité de calcul de position 34.

Afin d'avoir la meilleure estimation possible des satellites susceptibles de se coucher pendant ledit intervalle de temps, il est préférable de déterminer ledit ensemble de satellites peu de temps avant le début de la phase d'approche finale correspondant au passage de l'aéronef au point FAF. Par exemple, la détermination dudit ensemble de satellites peut être réalisée à un instant compris dans l'intervalle de temps [$T_{FAF}$ - 1 mn ; $T_{FAF}$].

Dans un mode particulier de réalisation de l'invention, pour déterminer ledit ensemble de satellites susceptibles de se coucher par rapport à l'aéronef au cours de l'intervalle de temps compris entre $T_{FAF}$ et $T_{TD}$, on calcule les deux équations suivantes pour chaque satellite Si du système de navigation satellitaire visible de l'avion au moment de la détermination dudit ensemble de satellites :

$$\alpha = \frac{\theta^i(k) - \theta^i(k-1)}{t(k) - t(k-1)} \qquad \text{(équation 1)}$$

où :

t(k) est le temps actuel ;
t(k-1) correspond à un instant antérieur au temps actuel ;
$\theta^i(k)$ est l'angle d'élévation du satellite Si par rapport à l'aéronef au temps t(k) ;
$\theta^i(k-1)$ est l'angle d'élévation du satellite Si par rapport à l'aéronef au temps t(k-1) ;
et

$$t_{set}^i = \frac{\theta_{mask} - \theta^i(k)}{\alpha} + t(k) \qquad \text{(équation 2)}$$

où :

t$^i_{set}$ est l'instant de coucher du satellite Si ;

$\theta_{mask}$ est l'angle de masque choisi pour le système de navigation satellitaire auquel appartient le satellite Si.

Le temps actuel t(k) correspond à l'instant où l'on réalise la détermination dudit ensemble de satellites. L'instant antérieur t(k-1) est choisi de façon à avoir une différence suffisamment significative de l'angle d'élévation du satellite pour obtenir une précision suffisante de sa variation en fonction du temps. A titre d'exemple non limitatif, on peut choisir t(k-1) antérieur d'une seconde à t(k).

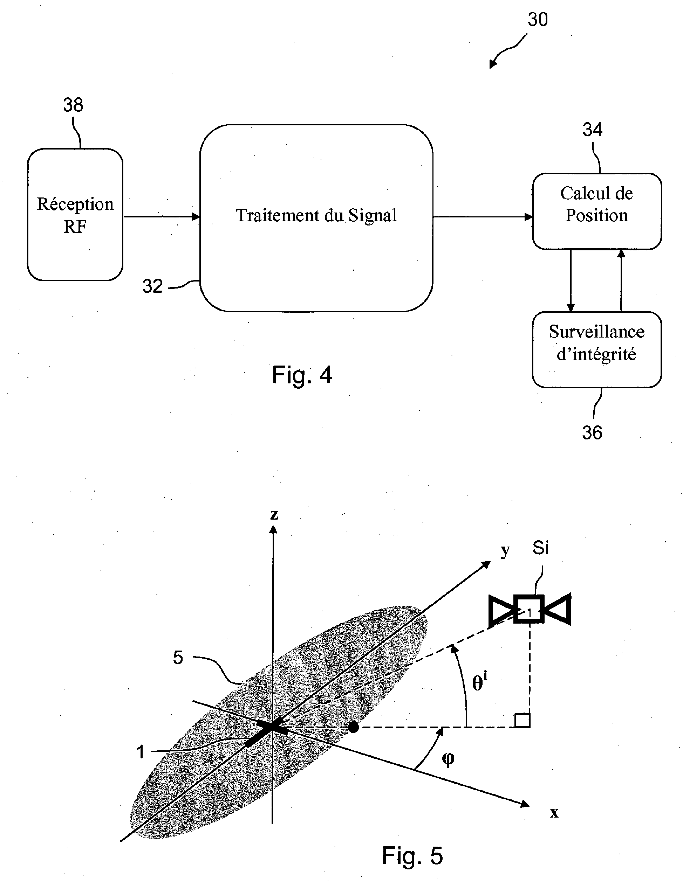

La figure 5 illustre la notion d'angle d'élévation $\theta^i$ d'un satellite Si par rapport à l'aéronef 1. Pour cela, on considère un plan horizontal 5 situé à l'altitude de l'aéronef. Les axes x et y représentés sur la figure sont inclus dans ce plan horizontal et l'axe z est perpendiculaire audit plan. On considère un segment de droite compris entre l'aéronef 1 et le satellite Si. L'angle d'élévation $\theta^i$ du satellite Si par rapport à l'aéronef est l'angle entre ledit segment de droite et ledit plan horizontal 5. La projection orthogonale dudit segment de droite sur le plan horizontal 5 forme un angle $\varphi$ par rapport à l'axe x. L'angle d'élévation est parfois aussi appelé angle de site.

L'équation 1 permet de déterminer une approximation de la variation $\alpha$ de l'élévation du satellite par rapport à l'aéronef en fonction du temps. Cette variation $\alpha$ tient compte à la fois du mouvement du satellite et du mouvement de l'aéronef. Elle est utilisée dans l'équation 2 pour estimer l'instant de coucher du satellite Si par rapport à l'aéronef. L'approximation qui est réalisée consiste à considérer la variation $\alpha$ comme constante au cours de l'intervalle de temps compris entre T$_{FAF}$ et T$_{TD}$.

L'angle de masque $\theta_{mask}$ est l'angle en dessous duquel on considère d'une part que les signaux émis par le satellite risquent de ne plus être reçus par l'aéronef, par exemple en raison de la présence d'obstacles et d'autre part que les mesures risqueraient de ne pas être suffisamment précises. En aéronautique, la valeur de cet angle de masque est usuellement de 5 degrés pour les satellites du système de navigation GPS et de 10 degrés pour les satellites du système Galileo.

Lorsque l'instant estimé t$^i_{set}$ de coucher du satellite Si appartient à l'intervalle de temps [T$_{FAF}$ ; t$_{TD}$] on considère que ce satellite Si est susceptible de se coucher pendant ledit intervalle de temps, donc pendant la phase d'approche finale de l'aéronef. On ajoute donc ce satellite Si à l'ensemble de satellites susceptibles d'être exclus du calcul de l'information de position de l'aéronef.

Le mode de réalisation décrit précédemment permet de déterminer de façon approximative mais simple les heures de coucher des satellites par rapport à l'aéronef pendant l'approche. De façon alternative, on pourrait envisager un mode de détermination basé sur des informations de type calendrier ou éphéméride relatives aux différents satellites, par exemple contenues dans une base de données, que l'on pourrait utiliser en combinaison avec des informations relatives à la trajectoire de l'aéronef, pour calculer les instants de coucher des différents satellites par rapport à l'aéronef.

Pendant l'approche finale, on détermine de façon itérative ladite information de position de l'aéronef, de préférence dans une unité de calcul de position 34 du récepteur GNSS 30, en excluant les informations relatives aux satellites appartenant audit ensemble de satellites déterminé avant le début de l'approche finale. On évite ainsi un saut dans la valeur de ladite position qui serait dû au coucher d'un satellite par rapport à l'aéronef pendant l'approche finale, puisque les satellites susceptibles de se coucher pendant cette approche finale sont exclus de la détermination de la position de l'aéronef. La figure 4 est un schéma synoptique du récepteur GNSS 30. Une tête 38 de réception radiofréquence (RF) reçoit des signaux haute-fréquence provenant des différents satellites GNSS (reçus au moyen d'une ou plusieurs antennes). Elle réalise notamment une amplification et une descente en fréquence desdits signaux. Les signaux sortant de ladite tête 38 de réception radiofréquence sont traités par un module 32 de traitement du signal qui calcule des mesures de pseudo-distance pour chacun des satellites GNSS visibles depuis l'aéronef. L'unité de calcul de position 34 reçoit ces mesures de pseudo-distance et les utilise pour déterminer la position de l'aéronef, en excluant les mesures de pseudo-distance qui correspondent à des satellites appartenant audit ensemble de satellites déterminé avant le début de l'approche finale.

Dans un mode préféré, on exclut en outre de ladite détermination les satellites qui se lèveraient, par rapport à l'aéronef, au cours de l'approche finale. On évite ainsi un saut dans la valeur de ladite position qui serait dû au lever d'un satellite par rapport à l'aéronef pendant l'approche finale. Ce mode préféré revient à figer, avant le début de l'approche finale, un ensemble de satellites que l'on va utiliser pour déterminer la position de l'aéronef pendant toute l'approche finale.

L'information de positon déterminée par l'unité de calcul de position 34 du récepteur GNSS 30 est utilisée pour le guidage de l'aéronef le long de sa trajectoire d'approche finale. Pour cela, cette information de position est transmise au calculateur xLS 15 qui détermine des déviations de l'aéronef par rapport à la trajectoire d'approche finale. Ces déviations sont transmises au calculateur de guidage AFS 18 qui détermine des consignes de guidage de l'aéronef. Le guidage de l'aéronef selon ces consignes de guidage est mis en oeuvre soit par un pilote automatique recevant lesdites consignes de guidage, soit par un pilote de l'aéronef utilisant un directeur de vol recevant lesdites consignes de guidage.

Le guidage de l'aéronef le long de sa trajectoire d'approche finale, en fonction de ladite information de position de l'aéronef, est réalisé jusqu'à une hauteur de décision correspondant à l'approche considérée. Ce guidage peut aller jusqu'à l'atterrissage automatique dans le cas de certaines approches.

Dans un mode particulier de réalisation, la détermination de l'information de position de l'aéronef par l'unité de calcul de position 34 prend en compte non seulement les informations provenant des satellites GNSS, mais aussi des informations issues d'un système d'augmentation et traitées par une unité de surveillance d'intégrité 36 comme représenté sur la figure 4. Cela permet d'améliorer notamment l'intégrité de ladite information de position de l'aéronef.

La technique d'augmentation utilisée peut être de type SBAS, ou ABAS, ce qui permet d'améliorer l'intégrité de ladite information de position de l'aéronef sans recourir à une station sol. Toutefois, il est également possible d'utiliser une technique d'augmentation GBAS faisant appel à des stations au sol.

Dans un autre mode particulier de réalisation, les satellites dont les informations sont utilisées pour la détermination de ladite information de position appartiennent à une pluralité de systèmes de navigation satellitaire GNSS. Les systèmes de navigation GNSS susceptibles d'être utilisés sont par exemple et de façon non limitative : GPS (Etats Unis), Galiléo (Europe), GLONASS (Russie), Compass/Beidou (Chine)... Ce mode de réalisation présente l'avantage de permettre la détermination de l'information de position de l'aéronef même si le nombre de satellites non exclus appartenant à une constellation de satellites d'un desdits systèmes de navigation GNSS est insuffisant pour déterminer ladite information de position avec la précision et l'intégrité requises. En effet, en combinant les informations provenant de satellites appartenant à plusieurs constellations correspondant à différents systèmes de navigation satellitaires GNSS, on obtient suffisamment de mesures de pseudo-distances relatives à ces satellites pour déterminer une information de position de l'aéronef.

## Revendications

1. Procédé de pilotage d'un aéronef (1) lors d'une approche en vue d'un atterrissage sur une piste d'atterrissage (2), ladite approche étant préalablement sélectionnée et le guidage de l'aéronef au cours de ladite approche utilisant une information de position de l'aéronef obtenue d'au moins un système de navigation satellitaire GNSS, **caractérisé en ce que** :

   avant le début de l'approche finale correspondant à ladite approche, il comporte les étapes suivantes :

   déterminer de façon automatique un premier instant $t_{FAF}$ correspondant au début de ladite approche finale ;
   déterminer de façon automatique un deuxième instant $t_{TD}$ correspondant à l'atterrissage de l'aéronef sur ladite piste ; et
   déterminer de façon automatique un ensemble de satellites (Si) dudit système de navigation satellitaire susceptibles d'être exclus du calcul de ladite information de position de l'aéronef pendant au moins une partie de l'intervalle de temps compris entre le premier instant $t_{FAF}$ et le deuxième instant $t_{TD}$ ;

   pendant ladite approche finale, les étapes suivantes sont réalisées de façon automatique et itérative :

   déterminer ladite information de position de l'aéronef en excluant les informations correspondant à tous les satellites (Si) dudit ensemble de satellites (Si) ; et
   guider l'aéronef le long de sa trajectoire d'approche finale en utilisant au moins ladite information de position.

2. Procédé de pilotage selon la revendication 1, selon lequel l'ensemble de satellites (Si) correspond aux satellites susceptibles de se coucher, par rapport à l'aéronef, au cours dudit intervalle de temps.

3. Procédé de pilotage selon la revendication 2, selon lequel ledit ensemble de satellites (Si) comprend en outre les satellites susceptibles de se lever, par rapport à l'aéronef, au cours dudit intervalle de temps.

4. Procédé de pilotage selon la revendication 2, selon lequel pour déterminer si un satellite Si est susceptible de se coucher, par rapport à l'aéronef, au cours dudit intervalle de temps, on calcule les deux équations suivantes :

$$\alpha = \frac{\theta^i(k) - \theta^i(k-1)}{t(k) - t(k-1)}$$

où:

t(k) est le temps actuel ;

t(k-1) correspond à un instant antérieur au temps actuel ;

$\theta^i(k)$ est l'angle d'élévation du satellite Si par rapport à l'aéronef au temps t(k) ;

$\theta^i(k-1)$ est l'angle d'élévation du satellite Si par rapport à l'aéronef au temps t(k-1) ;

et

$$t^i_{set} = \frac{\theta_{mask} - \theta^i(k)}{\alpha} + t(k)$$

où :

$t^i_{set}$ est l'instant de coucher du satellite Si ;

$\theta_{mask}$ est l'angle de masque choisi pour le système de navigation satellitaire auquel appartient le satellite Si ;

et si l'instant $t^i_{set}$ appartient à l'intervalle de temps $[T_{FAF} ; T_{TD}]$ on considère que le satellite Si est susceptible de se coucher pendant ledit intervalle de temps.

5. Procédé de pilotage selon la revendication 1, selon lequel ledit premier instant $t_{FAF}$ est déterminé en calculant un temps estimé d'arrivée $ETA_{FAF}$ de l'aéronef à la position de début d'approche finale et ledit deuxième instant $t_{TD}$ est déterminé en calculant un temps estimé d'arrivée $ETA_{TD}$ de l'aéronef à la position d'atterrissage sur la piste.

6. Procédé de pilotage selon la revendication 5, selon lequel lesdits premier et deuxième instants sont calculés en utilisant les formules suivantes :

$$t_{FAF} = ETA_{FAF} - \Delta t_{FAF}$$

$$t_{TD} = ETA_{TD} + \Delta t_{TD}$$

où

$\Delta t_{FAF}$ et $\Delta t_{TD}$ sont des marges de temps prédéterminées.

7. Procédé de pilotage selon la revendication 1, selon lequel ladite information de position de l'aéronef est obtenue en combinant des informations provenant d'au moins un système de navigation satellitaire GNSS et d'au moins un système d'augmentation.

8. Procédé de pilotage selon la revendication 7, selon lequel ledit au moins un système d'augmentation est de type SBAS, de type ABAS ou de type GBAS.

9. Procédé de pilotage selon la revendication 1, selon lequel ladite information de position de l'aéronef est obtenue en utilisant une pluralité de systèmes de navigation satellitaire GNSS.

10. Système de pilotage d'un aéronef (1) comportant :

des moyens (16, 22) pour sélectionner une approche en vue d'un atterrissage sur une piste d'atterrissage (2) ;
des moyens (30, 38) aptes à recevoir des signaux d'un système de navigation satellitaire GNSS ;
une unité de traitement (34) pour déterminer une information de position de l'aéronef à partir au moins desdits signaux reçus du système de navigation satellitaire GNSS ;
des moyens de guidage (18) de l'aéronef, aptes à recevoir de l'unité de traitement (34) ladite information de position de l'aéronef et à produire des signaux de guidage de l'aéronef le long d'une trajectoire d'approche finale (3) correspondant à une approche sélectionnée, en fonction de ladite information de position,

**caractérisé en ce que** ledit système comporte en outre :

des moyens (10) pour déterminer, avant le début de l'approche finale, un premier instant $t_{FAF}$ correspondant au début de ladite approche finale et un deuxième instant $t_{TD}$ correspondant à l'atterrissage de l'aéronef sur ladite piste ; et

des moyens (34) pour déterminer, avant le début de l'approche finale, un ensemble de satellites (Si) dudit système de navigation satellitaire susceptibles d'être exclus du calcul de ladite information de position de l'aéronef pendant au moins une partie de l'intervalle de temps compris entre le premier instant $t_{FAF}$ et deuxième instant $t_{TD}$ ;

ladite unité de traitement (34) déterminant l'information de position de l'aéronef, pendant l'approche finale, en excluant les informations correspondant à tous les satellites (Si) dudit ensemble de satellites.

**11.** Système de pilotage d'un aéronef (1) selon la revendication 10, dans lequel l'unité de traitement (34) est en outre apte à recevoir des informations d'un système d'augmentation et à déterminer l'information de position de l'aéronef à partir au moins des signaux reçus du système de navigation satellitaire GNSS et desdites informations reçues d'un système d'augmentation.

**12.** Système de pilotage d'un aéronef (1) selon la revendication 10 ou la revendication 11, comportant des moyens (32) aptes à recevoir des signaux d'une pluralité de systèmes de navigation satellitaire GNSS, l'unité de traitement (34) étant apte à déterminer l'information de position de l'aéronef à partir au moins des signaux reçus de ladite pluralité de systèmes de navigation satellitaire GNSS.

**13.** Aéronef comportant un système de pilotage selon l'une quelconque des revendications 10 à 12.

## Patentansprüche

**1.** Verfahren zum Steuern eines Flugzeugs (1) bei einem Landeanflug, um auf einer Landebahn (2) zu landen, wobei der Landeanflug im Voraus gewählt worden ist und die Führung des Flugzeugs während des Landeanflugs Informationen über die Position des Flugzeugs verwendet, die von wenigstens einem Satellitennavigationssystem GNSS erhalten werden, **dadurch gekennzeichnet, dass**:

es vor dem Beginn des Endanflugs, der dem Landeanflug entspricht, die folgenden Schritte umfasst:

automatisches Bestimmen eines ersten Zeitpunkts $T_{FAF}$, der dem Beginn des Endanflugs entspricht; automatisches Bestimmen eines zweiten Zeitpunkts $t_{TD}$, der dem Aufsetzen des Flugzeugs auf der Landebahn entspricht; und automatisches Bestimmen einer Gesamtheit von Satelliten (Si) des Satellitennavigationssystems, die von der Berechnung der Informationen über die Position des Flugzeugs wenigstens während eines Teils des Zeitintervalls, das zwischen dem ersten Zeitpunkt $t_{FAF}$ und dem zweiten Zeitpunkt $t_{TD}$ liegt, ausgeschlossen werden können;

während des Endanflugs die folgenden Schritte automatisch und iterativ ausgeführt werden:

Bestimmen der Informationen über die Position des Flugzeugs unter Ausschluss der Informationen, die allen Satelliten (Si) der Gesamtheit von Satelliten (Si) entsprechen; und Führen des Flugzeugs längs seiner Endanflugbahn unter Verwendung wenigstens der Positionsinformationen.

**2.** Steuerverfahren nach Anspruch 1, wobei die Gesamtheit von Satelliten (Si) den Satelliten entspricht, die während des Zeitintervalls in Bezug auf das Flugzeug vom Horizont verschwinden können.

**3.** Steuerverfahren nach Anspruch 2, wobei die Gesamtheit von Satelliten (Si) außerdem Satelliten enthält, die während des Zeitintervalls in Bezug auf das Flugzeug am Horizont erscheinen können.

**4.** Steuerverfahren nach Anspruch 2, wobei zum Bestimmen, ob ein Satellit Si während des Zeitintervalls in Bezug auf das Flugzeug vom Horizont verschwinden kann, die beiden folgenden Gleichungen berechnet werden:

$$\alpha \ = \ \frac{\theta^{i}\left(k\right) - \theta^{i}\left(k - 1\right)}{t\left(k\right) - t\left(k - 1\right)}$$

wobei:

$t(k)$ die aktuelle Zeit ist;
$t(k$ - 1) einem Zeitpunkt entspricht, der früher als die aktuelle Zeit ist;
$\theta^{i}(k)$ der Höhenwinkel des Satelliten Si in Bezug auf das Flugzeug zum Zeitpunkt $t(k)$ ist;
$\theta^{i}(k$ - 1) der Höhenwinkel des Satelliten Si in Bezug auf das Flugzeug zum Zeitpunkt $t(k$ - 1) ist;
und

$$t_{set}^{i} \ = \ \frac{\theta_{mask} - \theta^{i}\left(k\right)}{\alpha} \ + \ t\left(k\right)$$

wobei:

$t_{set}^{i}$ der Zeitpunkt ist, zu dem der Satellit Si vom Horizont verschwindet;

$\theta_{mask}$ der Maskierungswinkel ist, der für das Satellitennavigationssystem, zu dem der Satellit Si gehört, gewählt wird;

und dann, wenn der Zeitpunkt $t_{set}^{i}$ zu dem Zeitintervall [$t_{FAF}$, $t_{TD}$] gehört, davon ausgegangen wird, dass der Satellit Si während des Zeitintervalls vom Horizont verschwinden kann.

5. Steuerverfahren nach Anspruch 1, wobei der erste Zeitpunkt $t_{FAF}$ durch Berechnen einer geschätzten Ankunftszeit $ETA_{FAF}$ des Flugzeugs an der Position des Beginns des Endanflugs bestimmt wird und zweite Zeitpunkt $t_{TD}$ durch Berechnen einer geschätzten Ankunftszeit $ETA_{TD}$ des Flugzeugs an der Aufsetzposition auf der Landebahn bestimmt wird.

6. Steuerverfahren nach Anspruch 5, wobei der erste und der zweite Zeitpunkt unter Verwendung der folgenden Formeln berechnet werden:

$$t_{FAF} \ = \ ETA_{FAF} \ - \ \Delta t_{FAF}$$

$$t_{TD} \ = \ ETA_{TD} \ + \ \Delta t_{TD}$$

wobei
$\Delta t_{FAF}$ und $\Delta t_{TD}$ vorgegebene Zeitspannen sind.

7. Steuerverfahren nach Anspruch 1, wobei die Informationen über die Position des Flugzeugs durch Kombinieren von Informationen, die von wenigstens einem Satellitennavigationssystem GNSS und von wenigstens einem Anstiegssystem stammen.

8. Steuerverfahren nach Anspruch 7, wobei das wenigstens eine Anstiegssystem vom Typ SBAS, vom Typ ABAS oder vom Typ GBAS ist.

9. Steuerverfahren noch Anspruch 1, wobei die Informationen über die Position des Flugzeugs unter Verwendung mehrerer Satellitennavigationssysteme GNSS erhalten werden.

10. System zum Steuern eines Flugzeugs (1), das Folgendes umfasst:

Mittel (16, 22), um einen Landeanflug für eine Landung auf einer Landebahn (2) auszuwählen;

Mittel (30, 38), die Signale von einem Satellitennavigationssystem GNSS empfangen können;

eine Verarbeitungseinheit (34), um Informationen über die Position des Flugzeugs wenigstens anhand der von dem Satellitennavigationssystem GNSS empfangenen Signale zu bestimmen;

Mittel (18) zum Führen des Flugzeugs, die von der Verarbeitungseinheit (34) die Informationen über die Position des Flugzeugs empfangen können und Signale zum Führen des Flugzeugs längs einer Endanflugbahn (3), die dem ausgewählten Landeanflug entspricht, als Funktion der Positionsinformationen erzeugen können, **dadurch gekennzeichnet, dass** das System außerdem Folgendes umfasst:

Mittel (10), um vor dem Beginn des abschließenden Landeanflugs einen ersten Zeitpunkt $t_{FAF}$, der dem Beginn des Endanflugs entspricht, und einen zweiten Zeitpunkt $t_{TD}$, der dem Aufsetzen des Flugzeugs auf der Landebahn entspricht, zu bestimmen; und

Mittel (34), um vor dem Beginn des Endanflugs eine Gesamtheit von Satelliten (Si) des Satellitennavigationssystems zu bestimmen, die von der Berechnung der Informationen über die Position des Flugzeugs wenigstens während eines Teils des Zeitintervalls, das zwischen dem ersten Zeitpunkt $t_{FAF}$ und dem zweiten Zeitpunkt $t_{TD}$ liegt, ausgeschlossen werden können;

wobei die Verarbeitungseinheit (34) die Informationen über die Position des Flugzeugs während des Endanflugs unter Ausschluss der Informationen, die allen Satelliten (Si) der Gesamtheit von Satelliten entsprechen, bestimmt.

11. System zum Steuern eines Flugzeugs (1) nach Anspruch 10, wobei die Verarbeitungseinheit (34) außerdem Informationen von einem Anstiegssystem empfangen kann und die Informationen über die Position des Flugzeugs wenigstens anhand der Signale, die von dem Satellitennavigationssystem GNSS empfangen werden, und der Informationen, die von einem Anstiegssystem empfangen werden, bestimmen kann.

12. System zum Steuern eines Flugzeugs (1) nach Anspruch 10 oder Anspruch 11, das Mittel (32) umfasst, die Signale von mehreren Satellitennavigationssystemen GNSS empfangen können, wobei die Verarbeitungseinheit (34) die Informationen über die Position des Flugzeugs wenigstens anhand der Signale, die von den mehreren Satellitennavigationssystemen GNSS empfangen werden, bestimmen kann.

13. Flugzeug, das ein Steuersystem nach einem der Ansprüche 10 bis 12 umfasst.

**Claims**

1. Method of piloting an aircraft (1) during an approach with a view to a landing on a landing runway (2), the said approach being selected beforehand and the guidance of the aircraft in the course of the said approach using an item of position information for the aircraft, obtained from at least one GNSS satellite navigation system, **characterized in that**:

before the start of the final approach corresponding to the said approach, it comprises the following steps:

- determining in an automatic manner a first instant $t_{FAF}$ corresponding to the start of the said final approach;
- determining in an automatic manner a second instant $t_{TD}$ corresponding to the landing of the aircraft on the said runway; and
- determining in an automatic manner an assembly of satellites (Si) of the said satellite navigation system that are liable to be excluded from the calculation of the said item of position information for the aircraft during at least a part of the time interval lying between the first instant $t_{FAF}$ and the second instant $t_{TD}$;

during the said final approach, the following steps are carried out in an automatic and iterative manner:

- determining the said item of position information for the aircraft by excluding the information corresponding to all the satellites (Si) of the said assembly of satellites (Si); and
- guiding the aircraft along its final approach trajectory by using at least the said item of position information.

2. Method of piloting according to Claim 1, according to which the assembly of satellites (Si) corresponds to the satellites liable to set, with respect to the aircraft, in the course of the said time interval.

3. Method of piloting according to Claim 2, according to which the said assembly of satellites (Si) furthermore comprises the satellites liable to rise, with respect to the aircraft, in the course of the said time interval.

4. Method of piloting according to Claim 2, according to which, in order to determine whether a satellite Si is liable to set, with respect to the aircraft, in the course of the said time interval, the following two equations are calculated:

$$\alpha = \frac{\theta^i(k) - \theta^i(k-1)}{t(k) - t(k-1)}$$

where:

t(k) is the current time;
t(k-1) corresponds to an earlier instant prior to the current time;
$\theta^i(k)$ is the angle of elevation of the satellite Si with respect to the aircraft at the time t(k);
$\theta^i(k-1)$ is the angle of elevation of the satellite Si with respect to the aircraft at the time t(k-1);
and

$$t_{set}^i = \frac{\theta_{mask} - \theta^i(k)}{\alpha} + t(k)$$

where:

$t_{set}^i$ is the instant of setting of the satellite Si;
$\theta_{mask}$ is the masking angle chosen for the satellite navigation system to which the satellite Si belongs;
and if the instant $t_{set}^i$ belongs to the time interval $[t_{FAF}; t_{TD}]$, it is considered that the satellite Si is liable to set during the said time interval.

5. Method of piloting according to Claim 1, according to which the said first instant $t_{FAF}$ is determined by calculating an estimated time of arrival $ETA_{FAF}$ of the aircraft at the position of start of final approach and the said second instant $t_{TD}$ is determined by calculating an estimated time of arrival $ETA_{TD}$ of the aircraft at the runway landing position.

6. Method of piloting according to Claim 5, according to which the said first and second instants are calculated using the following formulae:

$$t_{FAF} = ETA_{FAF} - \Delta t_{FAF}$$

$$t_{TD} = ETA_{TD} - \Delta t_{TD}$$

where
$\Delta t_{FAF}$ and $\Delta t_{TD}$ are predetermined time margins.

7. Method of piloting according to Claim 1, according to which the said item of position information for the aircraft is obtained by combining information originating from at least one GNSS satellite navigation system and from at least one augmentation system.

8. Method of piloting according to Claim 7, according to which the said at least one augmentation system is of SBAS type, of ABAS type or of GBAS type.

9. Method of piloting according to Claim 1, according to which the said item of position information for the aircraft is obtained by using a plurality of GNSS satellite navigation systems.

**10.** System for piloting an aircraft (1) comprising:

- means (16, 22) for selecting an approach with a view to a landing on a landing runway (2);
- means (30, 38) able to receive signals from a GNSS satellite navigation system;
- a processing unit (34) for determining an item of position information for the aircraft on the basis at least of the said signals received from the GNSS satellite navigation system;
- guidance means (18) of the aircraft, able to receive from the processing unit (34) the said item of position information for the aircraft and to produce guidance signals for guiding the aircraft along a final approach trajectory (3) corresponding to a selected approach, as a function of the said item of position information,

**characterized in that** the said system furthermore comprises:

- means (10) for determining, before the start of the final approach, a first instant $t_{FAF}$ corresponding to the start of the said final approach and a second instant $t_{TD}$ corresponding to the landing of the aircraft on the said runway; and
- means (34) for determining, before the start of the final approach, an assembly of satellites (Si) of the said satellite navigation system that are liable to be excluded from the calculation of the said item of position information for the aircraft during at least a part of the time interval lying between the first instant $t_{FAF}$ and second instant $t_{TD}$;

the said processing unit (34) determining the item of position information for the aircraft, during the final approach, by excluding the information corresponding to all the satellites (Si) of the said assembly of satellites.

**11.** System for piloting an aircraft (1) according to Claim 10, in which the processing unit (34) is furthermore able to receive information from an augmentation system and to determine the item of position information for the aircraft on the basis at least of the signals received from the GNSS satellite navigation system and said information received from an augmentation system.

**12.** System for piloting an aircraft (1) according to Claim 10 or Claim 11, comprising means (32) able to receive signals from a plurality of GNSS satellite navigation systems, the processing unit (34) being able to determine the item of position information for the aircraft on the basis at least of the signals received from the said plurality of GNSS satellite navigation systems.

**13.** Aircraft comprising a piloting system according to any one of Claims 10 to 12.

Fig. 1

EP 2 573 586 B1

FAF

1

3

TD

2

t

$t_{FAF}$

$t_{TD}$

Fig. 2

10

30

heure estimée
d'arrivée à FAF

FMS

récepteur
GNSS

heure estimée
d'arrivée à TD

Fig. 3

30

38

Réception RF

Traitement du Signal

32

Calcul de Position

34

Surveillance d'intégrité

36

Fig. 4

Fig. 5

EP 2 573 586 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1965219 A1